# EUROPEAN PATENT APPLICATION

(11) **EP 4 417 578 A1**
(43) Date of publication of application: **21.08.2024**
(21) Application number: 22880976.0
(22) Date of filing: 11.10.2022
(51) Int. Cl.: C01G 23/00, G03G 9/08

(54) **POWDER AND DISPERSION OF FINE STRONTIUM TITANATE PARTICLES, AND RESIN COMPOSITION**

(30) Priority: 15.10.2021 JP 2021169919
(71) Applicant: Toda Kogyo Corp., Hiroshima-shi, Hiroshima 732-0828 (JP)
(72) Inventor: KAWAGUCHI, Takamoto, Otake-shi, Hiroshima 739-0652 (JP); TAMARI, Kousaku, Otake-shi, Hiroshima 739-0652 (JP); NAKATA, Kenichi, Otake-shi, Hiroshima 739-0652 (JP); UEMOTO, Shinji, Otake-shi, Hiroshima 739-0652 (JP); OSHIMO, Shiori, Otake-shi, Hiroshima 739-0652 (JP); KAWAI, Yoshiki, Otake-shi, Hiroshima 739-0652 (JP); MISHIMA, Yuji, Sanyoonoda-shi, Yamaguchi 756-0847 (JP); KANEMITSU, Masahiro, Sanyoonoda-shi, Yamaguchi 756-0847 (JP)
(74) Representative: Greaves Brewster LLP
(86) International application number: PCT/JP2022/037763
(87) International publication number: WO 2023/063281

(57) **Abstract**

The present disclosure is directed to a powder of fine spherical strontium titanate particles with a primary particle having an average primary particle size equal to or less than 50 nm, a circularity greater than or equal to 0.8, and a lattice constant equal to or less than 3.925 Å. The powder of fine strontium titanate particles has high crystallinity, a low moisture content, and a good particle size distribution, so that a composite film having homogeneously distributed particles without suffering resin film deterioration can be provided.

## Description

### TECHNICAL FIELD

The present disclosure is directed to obtaining a powder of fine strontium titanate particles that is suitable for a filler.

### BACKGROUND ART

In recent years, as various electronic devices are reduced in size and weight, and have improved performance, there is an increasing need for an organic-inorganic hybrid material having the functionality of an inorganic filler (refractive index, dielectric constant, electrical conductivity, magnetism, thermal conductivity, etc.) while maintaining the processability of an organic resin.

For example, brightness enhancing films used in displays, and diffractive optical elements used in AR/MR glasses, etc., require a high refractive index that cannot be reached by a resin alone, in order to achieve characteristics such as higher brightness, thinner film, and improved viewing angles. For that reason, it is contemplated that an inorganic filler having a high refractive index is added to a resin to improve the refractive index of a resin film.

Also, as electronic components are reduced in weight and downsized, and have improved performance, there has been active development to use a resin composition of a resin and a high dielectric inorganic filler, instead of an inorganic material, such as silicon nitride, in an insulating film of, for example, a thin film transistor (TFT) for easy pattern formation.

Characteristics required for such inorganic filler in the hybrid material include an increased filling rate, uniform dispersion, and reduction in deterioration of a resin film caused by hybridization. As the filler that satisfies such characteristics, fine spherical particles having a good particle size distribution are suitable for the increased filling rate, and particles having high crystallinity are suitable for the reduction in deterioration of a resin film.

On the other hand, strontium titanate is a high-performance material having a perovskite structure, and is used in various applications as a single component. For example, it is used in optical applications, such as a pigment, a reflective material, and a light collecting material, by utilizing its high refractive index, in ceramic capacitor applications due to its high dielectric constant, and further in a visible light photocatalyst by utilizing that it has photocatalytic activity. It is also used in, for example, a semiconductor, a semiconductor capacitor, a thermoelectric material, EL, and a light emitting material by utilizing that addition of another element allows it to be semiconducting.

By forming a composite of such high-performance strontium titanate and resin, it is expected that a new material having functionality unachievable with resin alone can be produced.

There have previously been various reports on fine strontium titanate particles (Patent literatures 1 to 9 and Non-patent literature 1).

### CITATION LIST

### PATENT LITERATURE

[Patent Literature 1] Japanese Laid-Open Patent Publication No. H06-48734
[Patent Literature 2] Japanese Laid-Open Patent Publication No. H05-58633
[Patent Literature 3] Japanese Laid-Open Patent Publication No. 2003-277054
[Patent Literature 4] Japanese Laid-Open Patent Publication No. 2015-137208
[Patent Literature 5] Japanese Laid-Open Patent Publication No. 2018-20919
[Patent Literature 6] Japanese Laid-Open Patent Publication No. 2019-151507
[Patent Literature 7] Japanese Laid-Open Patent Publication No. 2016-69211
[Patent Literature 8] Japanese Laid-Open Patent Publication No. 2015-151304
[Patent Literature 9] International Patent Publication No. WO2015/152237

### NON-PATENT LITERATURE

[Non-patent Literature 1] Ceramics International (2015), 41, 13516-13524

### SUMMARY OF INVENTION

### TECHNICAL PROBLEM

Nevertheless, a powder of fine strontium titanate particles suitable for the filler as described above, although currently strongly needed, has not been obtained yet.

More specifically, the foregoing Patent Literature 1 describes a method for producing a powder of fine strontium titanate particles having an average particle size equal to or less than 0.05 µm, which however does not consider the crystallinity of a resulting strontium titanate. In addition, this method requires an inline mixer for instantly, uniformly mixing reactants, which makes the process complicated and industrially undesirable.

The foregoing Patent Literature 2 then describes a manufacturing method for obtaining strontium titanate by subjecting a hydrolysis product of a titanium compound, and a strontium compound, to a wet reaction in the presence of hydrogen peroxide. Such strontium titanate then has a large average particle size greater than or equal to 0.1 µm, and this method is also uneconomical as a greater amount of hydrogen peroxide is used.

Also, the foregoing Patent Literatures 3 and 4 describe obtaining a fine particle of strontium titanate by reacting a hydrolysis product of a titanium compound, and a water-soluble strontium salt, in a strong alkali solution, and such fine particle of strontium titanate however has a cuboid or cube shape and is not suitable for a filler. They then do not take into consideration the crystallinity.

Also, the foregoing Patent Literatures 5 and 6 describe obtaining spherical strontium titanate by adding a hydroxycarboxylic acid or a third component to a hydrolysis product of a titanium compound, and a water-soluble strontium salt, to react in a strong alkali solution. Such strontium titanate then has properties that may vary due to the addition of hydroxycarboxylic acid or the other element, and is not suitable for a filler to impart the property of strontium titanate alone. They then do not take into consideration the crystallinity.

Also, the foregoing Patent Literatures 7 and 8 describe cube-shaped strontium titanate having a good photocatalytic property, and such strontium titanate has a controlled cube shape for exerting catalytic functions and is not suitable for resin filler applications.

Also, the foregoing Patent Literature 9 describes spherical strontium titanate having an average particle size of 50 to 150 nm by means of a wet reaction, and such strontium titanate has a large average particle size greater than or equal to 50 nm to be unable to have adhesion to a resin, and is thus less likely to be a preferable filler.

Also, the foregoing Non-patent Literature 1 reports cube-shaped strontium titanate having a primary particle size of 32 to 45 nm. In this respect, such strontium titanate has a cube particle shape to be unable to increase a filling rate, and thus is not suitable for a filler.

The present disclosure thus has a technical objective to provide a fine strontium titanate particle that is suitable for a filler in a composite material.

### SOLUTION TO PROBLEM

The objective can be achieved by the present disclosure as follows.

Specifically, the present disclosure is directed to a powder of fine spherical strontium titanate particles with a primary particle having an average primary particle size equal to or less than 50 nm, a circularity greater than or equal to 0.80, and a lattice constant equal to or less than 3.925 Å (present disclosure 1).

The powder of fine spherical strontium titanate particles according to the present disclosure is a fine spherical particle to thereby enable an improved filling property, and further has high crystallinity to contain less moisture and hydroxyl groups in the particle and reduce moisture release from a filler to a resin when composited with the resin.

The present disclosure is also directed to the powder of fine spherical strontium titanate particles according to the present disclosure 1, wherein the standard deviation of the primary particle size is equal to or less than 6.0 nm (present disclosure 2).

This enables homogeneous dispersion of a filler within a resin to reduce uneven characteristics in a composite film.

The present disclosure is also directed to the powder of fine spherical strontium titanate particles according to the present disclosure 1 or 2, wherein the moisture content is equal to or less than 3.00 wt.% (present disclosure 3).

Such filler has a reduced moisture content and thereby prevents deterioration of a resin caused by the moisture when composited with the resin.

The present disclosure is also directed to a dispersion containing a powder of fine strontium titanate particles according to any of the present disclosures 1 to 3 (present disclosure 4).

The fine strontium titanate particle is suitable for a filler and enables processing and development for various applications.

The present disclosure is also directed to a resin composition containing a powder of fine strontium titanate particles according to any of the present disclosures 1 to 3 (present disclosure 5).

The resin composition can be formed as a resin composition having functionality.

### ADVANTAGEOUS EFFECTS OF INVENTION

The powder of fine strontium titanate particles according to the present disclosure is fine and has high crystallinity, and hence can include reduced film-deteriorating components such as moisture to prevent deterioration in a film of a composite. Thus, it is suitable for a filler in an organic-inorganic hybrid material.

### BRIEF DESCRIPTION OF DRAWINGS

Figure 1 is an electron microscopy photograph of strontium titanate obtained in Example 5.
Figure 2 is a graph showing results for measurement of a weight reduction in strontium titanate obtained in Example 5 and a comparative example.

### DESCRIPTION OF EMBODIMENTS

An embodiment of the present disclosure is described in detail as follows.

A powder of fine strontium titanate particles according to the present disclosure is a spherical particle with a primary particle having an average primary particle size equal to or less than 50 nm, a circularity greater than or equal to 0.80, and a lattice constant equal to or less than 3.925 Å.

The powder of fine strontium titanate particles according to the present disclosure has a primary particle having an average primary particle size equal to or less than 50 nm. The average primary particle size is controlled in the foregoing range so that the powder of fine strontium titanate particles can be homogeneously dispersed in a resin film. The average primary particle size is preferably equal to or less than 45 nm, more preferably equal to or less than 40 nm. The lower limit value is about 8 nm.

The powder of fine strontium titanate particles according to the present disclosure has a spherical particle shape, and has a circularity greater than or equal to 0.8. When the circularity of the fine strontium titanate particle is less than 0.8, its shape may be, for example, cuboid and the packing density may be reduced. The circularity is more preferably greater than or equal to 0.82, even more preferably from 0.83 to 1.0. The circularity is then evaluated by using a method as described in the following.

The powder of fine strontium titanate particles according to the present disclosure has a lattice constant equal to or less than 3.925 Å. When the lattice constant is greater than 3.925 Å, strontium titanate crystals are considered to contain a large amount of moisture and hydroxyl groups, which may cause deterioration of a resin film. The lattice constant is more preferably equal to or less than 3.923 Å, even more preferably equal to or less than 3.920 Å. The lower limit value of the lattice constant is 3.905 Å.

The powder of fine strontium titanate particles according to the present disclosure preferably has a standard deviation of the primary particle size equal to or less than 6.0 nm. When the standard deviation of the primary particle size of the fine strontium titanate particle is greater than 6.0 nm, the particle size distribution is poor to impede homogeneous dispersion and this may cause uneven characteristics in a resin composite. The standard deviation of the primary particle size is more preferably equal to or less than 5.5 nm, even more preferably equal to or less than 5.0 nm. The lower limit value is about 2.0 nm. The standard deviation of the primary particle size is then evaluated by using a method as described in the following.

The powder of fine strontium titanate particles according to the present disclosure preferably has an Sr/Ti molar ratio of from 0.90 to 1.10. The Sr/Ti ratio is controlled in the foregoing range so that certain properties of the strontium titanate can be exerted. The Sr/Ti ratio is more preferably from 0.95 to 1.05, even more preferably from 0.98 to 1.02.

The powder of fine strontium titanate particles according to the present disclosure preferably has a moisture content equal to or less than 3.00 wt.%. When the moisture content is greater than 3.00 wt.%, the moisture from a filler may impede hardening of a resin film as the composite film is produced, and the deterioration of a resin film may be accelerated. The moisture content is more preferably equal to or less than 2.80 wt.%, even more preferably equal to or less than 2.50 wt.%. The lower limit value is about 1.00 wt.%.

The powder of fine strontium titanate particles according to the present disclosure preferably has a weight reduction equal to or less than 6.00 wt.% at a temperature of up to 1000 °C. The weight reduction reflects the amount of moisture and hydroxyl groups in the particle. When it is greater than 6.00 wt.%, a large amount of moisture may appear from a filler to impede hardening of a resin film as the composite film is produced, and the deterioration of a resin film may be accelerated. The weight reduction is more preferably equal to or less than 5.50 wt.%, even more preferably equal to or less than 5.20 wt.%.

Next, a method for producing a powder of fine strontium titanate particles according to the present disclosure is described.

The powder of fine strontium titanate particles according to the present disclosure can be obtained by neutralizing a titanium tetrachloride solution with a strontium hydroxide solution to acquire a slurry of hydrous titanium hydroxide (neutralization reaction), heating the slurry of hydrous titanium hydroxide before washing it with water, and adding it to a strontium hydroxide solution to subject to a wet reaction in a temperature range of from 100 °C to 300 °C.

The ratio of the titanium raw material and the alkaline solution (Sr/Ti) when added for the neutralization reaction is preferably a molar ratio of from 1.1 to 1.8. The ratio less than 1.1 results in reduction in production yield of strontium titanate core particles and the ratio greater than 1.8 results in a poor distribution of the primary particle of strontium titanate. The ratio is more preferably from 1.25 to 1.65.

After the neutralization reaction, as CM (electrical conductivity) after washing the resulting hydrous titanium hydroxide colloid with water, the CM of the colloidal slurry is preferably equal to or less than 10 mS/cm, more preferably equal to or less than 8 mS/cm.

The reaction solution for producing the fine strontium titanate particles preferably has a pH of from 11 to 13.5, and a temperature range of from 100 °C to 300 °C.

The reaction solution for producing the fine strontium titanate particles preferably has a reaction concentration of from 0.05 mol/L to 0.7 mol/L as converted with respect to the titanium compound. The reaction concentration less than 0.05 mol/L results in a low yield and being unsuitable for industrial applications, and the reaction concentration greater than or equal to 0.7 mol/L results in precipitation of Sr(OH)₂ because the amount of strontium hydroxide in the reaction solution exceeds its solubility, and in making it difficult to perform a homogeneous liquid phase reaction.

After the neutralization reaction, a strontium hydroxide solution is added. The amount of the strontium hydroxide solution that is added is determined with respect to Ti in the reaction solution such that the Sr/Ti molar ratio is from 1.5 to 3.0.

A nitrogen flow during the reaction is preferably used for control to prevent the strontium compound and carbon dioxide, etc., in the air from reacting.

The reaction temperature of the wet reaction is preferably 60 °C to 300 °C. When the reaction temperature is less than 60 °C, it is difficult to obtain dense, fine spherical particles of strontium titanate. When the reaction temperature is greater than 300 °C, it is difficult to design a hydrothermal container. The reaction temperature is preferably 65 °C to 250 °C.

The particles after the wet reaction are washed with water and dried according to a conventional method. The washing with water can wash away excessive strontium. It also can remove impurities, such as Na, K, and Cl, concomitantly.

In the present disclosure, firing and pulverizing process, and disintegration process may also be performed.

The present disclosure can be directed to a dispersion containing the strontium titanate.

Also, any of an aqueous and solvent dispersion medium can be used as a dispersion medium in the present disclosure.

The dispersion medium for an aqueous dispersion includes water, or alcohol solvents, such as methyl alcohol, ethyl alcohol, propyl alcohol, isopropyl alcohol, and butyl alcohol; glycol ether solvents, such as methyl cellosolve, ethyl cellosolve, propyl cellosolve, and butyl cellosolve; oxyethylene or oxypropylene addition polymers, such as diethylene glycol, triethylene glycol, polyethylene glycol, dipropylene glycol, tripropylene glycol, polypropylene glycol; alkylene glycols, such as ethylene glycol, propylene glycol, 1,2,6-hexanetriol; and water-soluble organic solvents, such as glycerin, and 2-pyrrolidone. One or more of those dispersion media for the aqueous dispersion can be combined and used according to intended applications.

The dispersion medium for a solvent dispersion includes, for example, aromatic hydrocarbons, such as toluene, and xylene; ketones, such as methyl ethyl ketone and cyclohexanone; amides, such as N,N-dimethylformamide, N,N-dimethylacetamide, and N-methyl pyrrolidone; ether alcohols, such as ethylene glycol monomethyl ether, ethylene glycol monoethyl ether, diethylene glycol monomethyl ether, propylene glycol monomethyl ether, and propylene glycol monoethyl ether; ether acetates, such as ethylene glycol monomethyl ether acetate, ethylene glycol monoethyl ether acetate, propylene glycol monomethyl ether acetate, and propylene glycol monoethyl ether acetate; acetic esters, such as ethyl acetate, butyl acetate, and isobutyl acetate; lactic acid esters, such as methyl lactate ester, ethyl lactate ester, and propyl lactate ester; cyclic esters, such as ethylene carbonate, propylene carbonate, and γ-butyrolactone; and various monomers. One or more of those dispersion media for the solvent dispersion can be combined and used according to intended applications.

The concentration of the powder of fine strontium titanate particles in the dispersion according to the present disclosure is preferably adjusted from 5% by weight to 60% by weight. The concentration less than 5% by weight results in reduced productivity as applied in a next process and the concentration greater than 60% by weight results in being less likely to provide a highly flowable slurry. The concentration is more preferably from 10% by weight to 55% by weight, even more preferably from 15% by weight to 50% by weight.

For example, a dispersant, and an additive (such as a resin, defoamer, auxiliary agent) can also be added to the dispersion according to the present disclosure, as necessary. The dispersant in the present disclosure can be appropriately selected and used according to the powder of fine strontium titanate particles and the type of the dispersion medium used. The dispersant may include, for example, organic silicon compounds, such as alkoxysilane, silane coupling agents, and organopolysiloxane; organic titanium compounds, such as titanate coupling agents; organic aluminum compounds, such as aluminate coupling agents; organic zirconium compounds, such as zirconate coupling agents; a surfactant; or a polymeric dispersant. One or more of those dispersants can be combined and used.

The organic silicon compound may include, for example, alkoxysilane, such as methyltrimethoxysilane, methyltriethoxysilane, dimethyldiethoxysilane, phenyltriethoxysilane, ethyltriethoxysilane, propyltriethoxysilane, butyltriethoxysilane, hexyltriethoxysilane, octyltriethoxysilane, tetraethoxysilane, and tetramethoxysilane; silane coupling agents, such as vinyltrimethoxysilane, vinyltriethoxysilane, γ-aminopropyltriethoxysilane, γ-glycidoxypropyltrimethoxysilane, γ-mercaptopropyltrimethoxysilane, γ-methacryloyloxypropyltrimethoxysilane, N-(β-aminoethyl)-γ-aminopropyltrimethoxysilane, γ-glycidoxypropylmethyldimethoxysilane, and γ-chloropropyltrimethoxysilane; and organopolysiloxane, such as polysiloxane, methyl hydrogen polysiloxane, and modified polysiloxane.

The organic titanium compound may include, for example, isopropyl triisostearoyl titanate, isopropyl tris(dioctylpyrophosphate)titanate, bis(dioctylpyrophosphate)oxyacetate titanate, isopropyltri(N-aminoethyl-aminoethyl) titanate, tris(dioctylpyrophosphate)ethylene titanate, isopropyl dioctylpyrophosphate titanate, isopropyl tris(dodecylbenzenesulfonyl) titanate, titanium tetra normal butoxide, titanium tetra-2-ethylhexoxide, tetraisopropyl bis(dioctylphosphite) titanate, tetraoctyl bis(ditridecylphosphite)titanate, tetra(2,2-diallyloxymethyl-1-butyl)bis(ditridecyl)phosphite titanate, tetraoctyl bis(ditridecylphosphate)titanate, tetra(2-2-diallyloxymethyl-1-butyl)bis(ditridecyl)phosphate titanate, bis(dioctylpyrophosphate)oxyacetate titanate, and bis(dioctylpyrophosphate)ethylene titanate.

The organic aluminum compound may include, for example, acetoalkoxyaluminum diisopropylate, aluminum diisopropoxy monoethylacetoacetate, aluminum trisethylacetoacetate, and aluminum trisacetylacetonate.

The organic zirconium compound may include, for example, zirconium tetrakis acetylacetonate, zirconium dibutoxy bisacetylacetonate, zirconium tetrakis ethylacetoacetate, zirconium tributoxy monoethyl acetoacetate, and zirconium tributoxy acetylacetonate.

The surfactant may include anionic surfactants, such as fatty acid salts, sulfuric acid ester salts, sulfonic acid salts, and phosphoric acid ester salts; nonionic surfactants, for example, polyethylene glycol nonionic surfactants, such as polyoxyethylene alkyl ether, polyoxyethylene aryl ether, and polyhydric alcohol nonionic surfactants, such as sorbitan fatty acid ester; cationic surfactants, such as amine salt cationic surfactants and quaternary ammonium salt cationic surfactants; and amphoteric surfactants, for example, alkyl betaine such as alkyldimethyl aminoacetic acid betaine, and alkyl imidazoline.

The polymeric dispersant may include, for example, styrene-acrylic acid copolymers, styrene-maleic acid copolymers, and polycarboxylic acid and salts thereof.

The amount of the dispersant that is added may depend on the total surface area of the powder of fine strontium titanate particles in the dispersion, and may be appropriately prepared according to the intended application for the dispersion of the powder of fine strontium titanate particles, and to the type of the dispersant. Generally, from 0.01% by weight to 100% by weight of the dispersant is added with respect to the powder of fine strontium titanate particles in the dispersion medium so that the powder of fine strontium titanate particles can be homogeneously, finely dispersed in the dispersion medium and the dispersion stability can be improved. Additionally, not only is the dispersant directly added to the dispersion medium, but also the powder of fine strontium titanate particles may be pretreated with the dispersant.

The present disclosure is directed to a resin composition containing a fine strontium titanate particle in a resin.

The resin used may include, but not particularly limited to, for example, acrylic resins, polycarbonate, polystyrene resins, polyester resins, polyimide resins, polymethyl methacrylate (PMMA), AS resins, silicone resins, and fluororesin.

### EXAMPLES

A representative embodiment of the present disclosure is described as follows.

By using a photograph (25k) of the powder of fine strontium titanate particles observed with a transmission electron microscope (JEM-F200, Japan Electron Optics Laboratory Company), the average primary particle size and standard deviation were measured from about 300 particles. In this regard, the average primary particle size is a particle size and its standard deviation determined by obtaining, as each particle size, the diameter of a circle having an equivalent area to the area determined for each particle from the photograph, and by averaging the diameters of all particles measured. The particle shape was then determined from the photograph by the electron microscope. Further, the circularity was expressed as (4π × area)/perimeter² by using the measured particles from the photograph by the electron microscope.

By using "X-ray diffraction device D8 ADVANCE" (Bruker Japan K.K.)(Cu tube), the lattice constant a was measured in the range of 2θ from 10° to 90° and calculated by using the Rietveld method.

The stability of a composite film is evaluated by using moisture contents contained in the particles. The moisture content was measured by using Karl Fisher moisture meter (AQ-21000, Hiranuma Co., Ltd.).

The Sr/Ti ratio was measured by using an X-ray fluorescence analyzer (ZSX Primus II, Rigaku).

A weight reduction in the powder of fine strontium titanate particles according to the present disclosure was measured as follows. By using a thermogravimetry device (EXSTAR TG/DTA 7300, SII), a weight reduction from room temperature to 1000 °C was measured and a rate of reduction at 1000 °C was employed.

### Example 1

A solution was obtained by mixing a titanium tetrachloride solution with water to have a Ti molar concentration of 2.10 mol/l, and a 20 wt.% strontium hydroxide solution was added to said solution to have an Sr/Ti molar ratio of 1.37, and a slurry of titanium hydroxide was obtained. The slurry was washed with water to have a CM equal to or less than 10 mS/cm. The resulting slurry of titanium hydroxide was introduced into a strontium hydroxide solution that had been previously dissolved in a reaction vessel. This strontium hydroxide solution was adjusted to have a Sr/Ti molar ratio of 1.8. Also, the concentration during the reaction was at a strontium titanate concentration of 0.22 mol/l. A hydrothermal reaction was then performed with continued stirring at 180°C for 8 hours. After the reaction, the cooling to room temperature was conducted, a nutsche was then used to wash with water until the electrical conductivity of the filtrate was equal to or less than 200 µS/cm, to filter, and to dry, and a white powder of strontium titanate fine particles was obtained.

When observed by the electron microscope, the resulting powder of fine strontium titanate particles was spherical particles having an average primary particle size of 22.7 nm, a standard deviation of 5.9 nm, and a circularity of 0.84, the lattice constant a was 3.920 Å, and the moisture content was 2.58 wt.%.

### Examples 2 to 5

The same procedure as in Example 1 was conducted for obtaining powders of fine strontium titanate particles, except varying the reaction concentration, amount of strontium hydroxide for neutralization and crystallization, reaction temperature, and time.

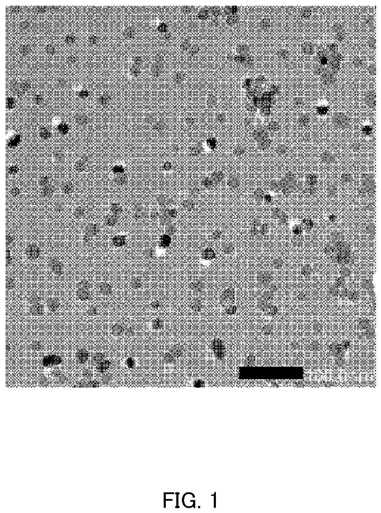

Conditions for production in the procedure are shown in Table 1, and powder properties of the resulting powders of fine strontium titanate particles are shown in Table 2. The standard deviation of the resulting powder of fine strontium titanate particles was 4.0 nm in Example 4 and 3.7 nm in Example 5, both of which were equal to or less than 6.0 nm. The moisture content was then 2.17 wt.% in Example 3, 2.99 wt.% in Example 4, and 2.21 wt.% in Example 5, all of which were equal to or less than 3.00 wt.%. An electron microscopy photograph of Example 5 is shown in Figure 1.

### Comparative Example

A powder of fine strontium titanate particles was produced by using Example 19 of Patent literature 1 as reference. That is, a titanium tetrachloride solution was added to pure water to stir for 1 hour. 5% ammonia water was added dropwise to this solution to obtain a white slurry with a pH of 7.8. This slurry was filtered, washed with water, then re-slurried, heated to 60°C, and subjected to an aging reaction at pH 6.0 for 40 minutes after adding acetic acid. After the aging reaction, it was filtered and washed with water to obtain a cake of hydrous titanium hydroxide gel. A slurry boiled after adding pure water to this hydrous titanium hydroxide gel cake, and a strontium hydroxide solution were adjusted to have an Sr/Ti ratio of 1.2, mixed through an inline mixer, and circulated at 80°C for 4 hours to subject to an aging reaction. After the aging reaction, the slurry was filtered, washed with water, and dried.

When observed by the electron microscope, the resulting powder of fine strontium titanate particles was spherical particles having an average primary particle size of 29.4 nm, a standard deviation of 6.7 nm, and a circularity of 0.85, the lattice constant a was 3.938 Å, and the moisture content was 4.23 wt.%.

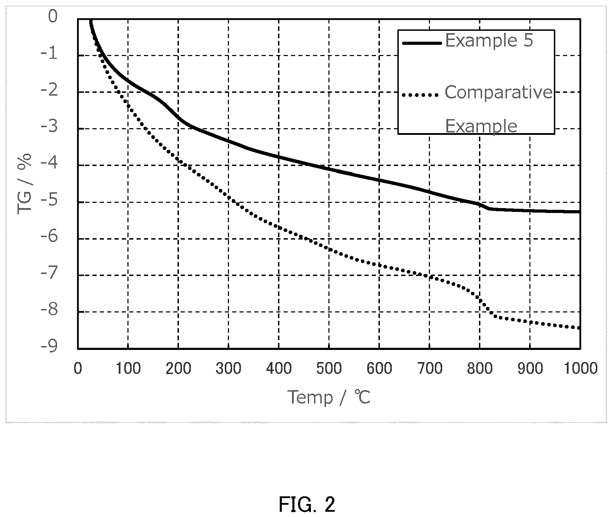

Figure 2 shows results for measurement of a thermogravimetric reduction in the powders of fine strontium titanate particles obtained in Example 5 and the comparative example. The thermogravimetric reduction at 1000 °C was 5.26 % in Example 5 and 8.44 % in the comparative example.

**[Table 1]**

| | Reaction concentration [mol/l] | Neutralization reaction Sr/Ti [mol ratio] | Wet reaction Sr/Ti [mol ratio] | Reaction temperature [°C] | Reaction time [hr] |
|---|---|---|---|---|---|
| Example 1 | 0.22 | 1.37 | 1.8 | 180 | 8 |
| Example 2 | 0.22 | 1.6 | 1.5 | 180 | 12 |
| Example 3 | 0.32 | 1.6 | 1.5 | 200 | 12 |
| Example 4 | 0.22 | 1.37 | 3 | 160 | 8 |
| Example 5 | 0.28 | 1.32 | 1.8 | 150 | 8 |
| Comparative Example 1 | Example 19 in JPH6-48734 | | | | |

**[Table 2]**

| | Average primary particle size [nm] | Lattice constant a [Å] | Shape | Circularity [-] | Sr/Ti [mol ratio] |
|---|---|---|---|---|---|
| Example 1 | 22.7 | 3.920 | spherical | 0.84 | 1.002 |
| Example 2 | 42.1 | 3.923 | spherical | 0.88 | 0.995 |
| Example 3 | 39.0 | 3.918 | spherical | 0.87 | 1.005 |
| Example 4 | 17.0 | 3.920 | spherical | 0.91 | 0.997 |
| Example 5 | 15.9 | 3.920 | spherical | 0.86 | 0.998 |
| Comparative Example 1 | 29.4 | 3.938 | spherical | 0.85 | 1.007 |

The moisture contents of the strontium titanate particles in Examples measured by the Karl Fisher moisture meter are equal to or less than 3 wt.% and thus lower as compared to the comparative example. When Example 5 and the comparative example are compared for the thermogravimetric reduction, Example 5 has less thermogravimetric reduction even as it is a fine particle. This suggests that the strontium titanate particle according to the present disclosure has high crystallinity, and fewer hydroxyl groups are remained in the particle. Thus, the fine strontium titanate particles in Examples, when used as a filler to mix and knead with a resin, enable production of a stable composite that allows for reducing deterioration of a film caused by moisture.

### INDUSTRIAL APPLICABILITY

The powder of fine strontium titanate particles according to the present disclosure is characterized by the ability to have a controlled average particle size according to its purpose, and to be fine and spherical, and have reduced defects, so that deterioration of a film is reduced and an increase in the packing density of a filler is facilitated. Thus, the powder of fine strontium titanate particles according to the present disclosure is suitable for a high refractive inorganic filler for increasing a refractive index of a resin composition utilized for brightness enhancing films in displays, and diffractive optical elements in AR/MR glasses, etc., or a high dielectric inorganic filler for a high dielectric resin composition that can be utilized for electronic components, such as a thin film transistor (TFT).

## Claims

1. A powder of fine strontium titanate particles having a spherical shape, and a primary particle having an average of primary particle size equal to or less than 50 nm, a circularity greater than or equal to 0.80, and a lattice constant equal to or less than 3.925 Å.

2. The powder of fine strontium titanate particles according to claim 1, wherein the standard deviation of the primary particle size is equal to or less than 6.0 nm.

3. The powder of fine strontium titanate particles according to claim 1 or 2, wherein the moisture content is equal to or less than 3.00 wt.%.

4. A dispersion containing a powder of fine strontium titanate particles according to claim 1 or 2.

5. A resin composition containing a powder of fine strontium titanate particles according to claim 1 or 2, and a resin.
